# EUROPÄISCHE PATENTANMELDUNG

(11) **EP 4 596 287 A1**
(43) Veröffentlichungstag der Anmeldung: **06.08.2025**
(21) Anmeldenummer: 24155672.9
(22) Anmeldetag: 05.02.2024
(51) Int. Cl.: B60K 17/28, F16H 3/089

(54) **ZAPFWELLENGETRIEBE**

(71) Anmelder: Deere & Company, Moline, IL 61265 (US)
(72) Erfinder: MAEURER, STEFAN, 68163 Mannheim (DE); SHINDE, PRADIP, 68163 Mannheim (DE)
(74) Vertreter: Holst, Sönke

(57) **Zusammenfassung**

Eine Zapfwellengetriebe (10) für einen landwirtschaftlichen Ackerschlepper umfasst eine erste Welle (18), die mit einem Antriebsmotor (12) verbindbar oder verbunden ist, eine zweite Welle (22), die mit einer Ausgangsschnittstelle (40) verbindbar oder verbunden ist, ein erstes Zahnrad (24), ein zweites Zahnrad (28) und ein drittes Zahnrad (30), die koaxial zur ersten Welle (18) angeordnet und jeweils mit der ersten Welle (18) in eine drehfeste, trennbare Verbindung bringbar sind, ein viertes Zahnrad (32), ein fünftes Zahnrad (36) und ein sechstes Zahnrad (42), die koaxial zur zweiten Welle (22) angeordnet sind, von denen das vierte Zahnrad (32) mit dem ersten Zahnrad (24) kämmt, das fünfte Zahnrad (36) mit dem zweiten Zahnrad (28) kämmt und das sechste Zahnrad (42) mit dem dritten Zahnrad (30) kämmt.

Das zweite Zahnrad (28) und das dritte Zahnrad (30) sind gemeinsam an einer ersten Hohlwelle (26) angebracht, die mit der ersten Welle (18) in eine drehfeste, trennbare Verbindung bringbar ist, und das vierte Zahnrad (32) und das fünfte Zahnrad (36) sind gemeinsam an einer zweiten Hohlwelle (34) angebracht, die mit der zweiten Welle (22) in eine drehfeste, trennbare Verbindung bringbar ist. Dadurch erreicht man eine vierte Übersetzungsstufe, in welcher die Kraftübertragung über sämtliche sechs Zahnräder erfolgt.

## Beschreibung

Die Erfindung betrifft ein Zapfwellengetriebe für einen landwirtschaftlichen Ackerschlepper und einen damit ausgestatteten Ackerschlepper.

### Stand der Technik

Im Stand der Technik sind landwirtschaftliche Ackerschlepper mit einem als Verbrennungsmotor ausgeführten Antriebsmotor ausgestattet, der im Betrieb die Räder zum Vortrieb des Ackerschleppers und eine Zapfwelle antreibt, die zum Antrieb von Zusatzgeräten dient, wie Bodenbearbeitungsgeräten oder Ballenpressen. Zwischen den Motor und den Zapfwellenausgang des Ackerschleppers ist ein Zapfwellengetriebe geschaltet. Derartige Zapfwellengetriebe weisen in der Regel mehrere durch einen Bediener auswählbare Übersetzungsstufen auf, die bei bestimmten Motordrehzahlen zu gewünschten Drehzahlen der Zapfwelle führen. Die Übersetzung eines zwischen dem Verbrennungsmotor und den Rädern in den Antriebsstrang eingefügten Fahrgetriebes ist in Stufen oder stufenlos veränderlich, um die Fahrgeschwindigkeit des Ackerschleppers zu verändern.

Ein Zapfwellengetriebe mit drei auswählbaren Übersetzungsstufen ist beispielsweise in der GB 2 363 830 A und in der DE 10 2005 002 880 A1 gezeigt. Das Zapfwellengetriebe weist drei unterschiedliche, auswählbare Übersetzungsstufen auf und umfasst daher drei kämmende Zahnradpaare. Die Übersetzungsstufe wird mittels eines fremdkraftbetätigten Aktors ausgewählt, der festlegt, welches der drei auf einer An- oder Abtriebswelle des Zapfwellengetriebes angeordneten Zahnräder in drehmomentschlüssiger Verbindung mit der An- oder Abtriebswelle steht. Der Aktor ermöglicht die Auswahl von drei Übersetzungsstufen, von denen in der beschriebenen Ausführungsform eine erste bei der Nenndrehzahl des Antriebsmotors von z.B. 2100/min eine Drehzahl der Abtriebswelle von 1000/min ermöglicht, eine zweite bei einer abgesenkten Drehzahl des Antriebsmotors von z.B. 1800/min eine Drehzahl der Abtriebswelle von 540/min ermöglicht, und eine dritte bei der Nenndrehzahl des Antriebsmotors von 2100/min eine Drehzahl der Abtriebswelle von 540/min ermöglicht.

### Problem

Die bisherige, dreistufige Übersetzung des Zapfwellengetriebes ermöglicht es nicht, ein weiteres Übersetzungsverhältnis zu erreichen, z.B. bei abgesenkter Drehzahl des Antriebsmotors eine Drehzahl von 1000/min. Eine naheliegende Lösung wäre eine Bereitstellung einer vierten Übersetzungsstufe, die jedoch zwei weitere Zahnräder und somit einen erhöhten Aufwand und Bauraum zur Folge hätte.

Die der Erfindung zu Grunde liegende Aufgabe wird darin gesehen, ein Zapfwellengetriebe bereitzustellen, das diese Nachteile vermeidet oder zumindest vermindert.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein Zapfwellengetriebe für einen landwirtschaftlichen Ackerschlepper umfasst eine erste Welle, die mit einem Antriebsmotor verbindbar oder verbunden ist, eine zweite Welle, die mit einer Ausgangsschnittstelle verbindbar oder verbunden ist, ein erstes Zahnrad, ein zweites Zahnrad und ein drittes Zahnrad, die koaxial zur ersten Welle angeordnet und jeweils mit der ersten Welle in eine drehfeste, trennbare Verbindung bringbar sind, ein viertes Zahnrad, ein fünftes Zahnrad und ein sechstes Zahnrad, die koaxial zur zweiten Welle angeordnet sind, von denen das vierte Zahnrad mit dem ersten Zahnrad kämmt, das fünfte Zahnrad mit dem zweiten Zahnrad kämmt und das sechste Zahnrad mit dem dritten Zahnrad kämmt. Das zweite Zahnrad und das dritte Zahnrad sind gemeinsam an einer ersten Hohlwelle angebracht, die mit der ersten Welle in eine drehfeste, trennbare Verbindung bringbar ist, und das vierte Zahnrad und das fünfte Zahnrad sind gemeinsam an einer zweiten Hohlwelle angebracht, die mit der zweiten Welle in eine drehfeste, trennbare Verbindung bringbar ist.

Mit anderen Worten geht man von einem an sich bekannten, dreistufigen Zapfwellengetriebe aus, wie es beispielsweise in der DE 10 2005 002 880 A1 gezeigt wird. Auf der ersten und zweiten Welle werden jedoch jeweils zwei Zahnräder gemeinsam auf eine Hohlwelle gesetzt. Dadurch erreicht man eine vierte Übersetzungsstufe, in welcher die Kraftübertragung über sämtliche sechs Zahnräder erfolgt.

### Ausführungsbeispiel

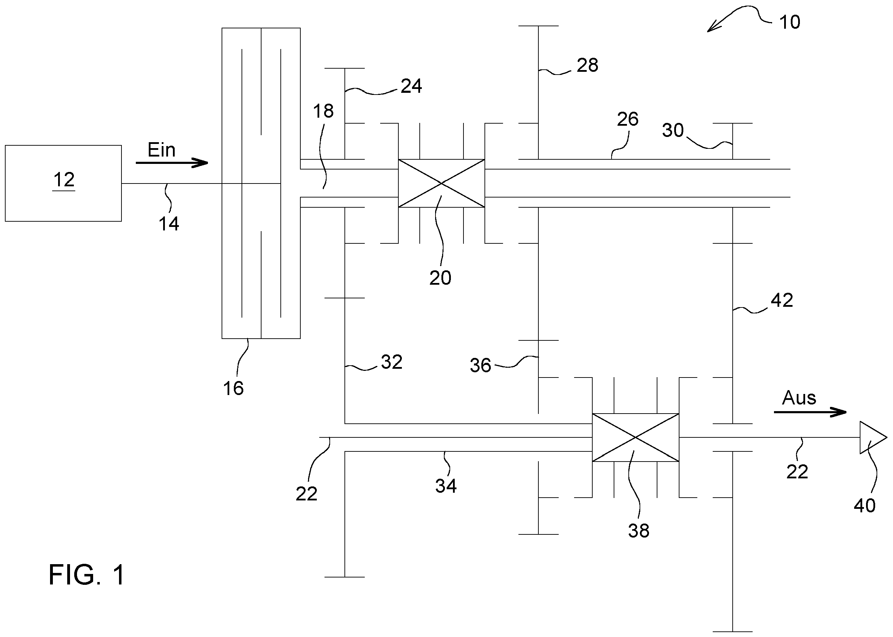

In der Zeichnung ist ein nachfolgend näher beschriebenes Ausführungsbeispiel der Erfindung dargestellt. Die Figur 1 zeigt eine schematische Darstellung eines Zapfwellengetriebes.

Ein in der Figur 1 gezeigtes Zapfwellengetriebe 10 umfasst eine Eingangswelle 14, die mit einem insbesondere als Verbrennungsmotor ausgeführten Antriebsmotor 12 eines Ackerschleppers (nicht gezeigt, s. aber DE 10 2005 002 880 A1, deren gesamte Offenbarung durch Verweis mit in die vorliegenden Unterlagen aufgenommen wird), in Antriebsverbindung steht. Die Eingangswelle 14 ist über eine Zapfwellenkupplung 16 mit einer ersten Welle 18 verbunden. Auf dieser ersten Welle 18 ist ein erstes, zur ersten Welle 18 koaxiales Zahnrad 24 frei drehbar gelagert. Eine gegenüber der ersten Welle 18 axial verschiebbare, erste Schaltkupplung 20 ist konfiguriert, die erste Welle 18 wahlweise mit dem ersten Zahnrad 24 in drehfeste Verbindung zu bringen oder diese Verbindung zu öffnen, sodass das erste Zahnrad 24 entweder mit der ersten Welle 18 fest verbunden oder ihr gegenüber frei drehbar ist.

Auf der ersten Welle 18 ist weiterhin eine erste, zur ersten Welle 18 koaxiale, erste Hohlwelle 26 frei drehbar gelagert, an welcher ein zweites Zahnrad 28 und ein drittes Zahnrad 30 drehfest montiert sind. Das zweite und dritte Zahnrad 28, 30 sind koaxial zur ersten Hohlwelle 26 angeordnet. Die erste Schaltkupplung 20 (oder eine weitere, nicht gezeigte Schaltkupplung) ist konfiguriert, die erste Welle 18 wahlweise mit der ersten Hohlwelle 26 bzw. das dritte Zahnrad 28 in drehfeste Verbindung zu bringen oder diese Verbindung zu öffnen, sodass die erste Hohlwelle 26 entweder mit der ersten Welle 18 fest verbunden oder ihr gegenüber frei drehbar ist.

Das Zapfwellengetriebe 10 umfasst weiterhin eine zweite Welle 22, die (direkt oder ggf. über weitere Übertragungselemente) mit einer Ausgangsschnittstelle 40 des Zapfwellengetriebes 10 verbunden ist, d.h. dem Zapfwellenanschluss des Ackerschleppers. Auf der zweiten Welle 22 ist eine zweite Hohlwelle 34 frei drehbar gelagert, mit welcher drehfest ein viertes Zahnrad 32, das mit dem ersten Zahnrad 24 kämmt, sowie ein fünftes Zahnrad 36, das mit dem zweiten Zahnrad 28 kämmt, verbunden sind. Die Symmetrieachsen des vierten und fünften Zahnrads 32, 36 verlaufen koaxial zur zweiten Welle 22. Eine gegenüber der zweiten Welle 22 axial verschiebbare, zweite Schaltkupplung 38 ist konfiguriert, die zweite Welle 22 wahlweise mit der zweiten Hohlwelle 34 bzw. dem fünften Zahnrad 36 in drehfeste Verbindung zu bringen oder diese Verbindung zu öffnen, sodass die zweite Hohlwelle 34 entweder mit der zweiten Welle 22 fest verbunden oder ihr gegenüber frei drehbar ist.

Zudem ist auf dieser zweiten Welle 22 ist ein sechstes, zur zweiten Welle 22 koaxiales Zahnrad 42 frei drehbar gelagert. Die zweite Schaltkupplung 38 (oder eine weitere, nicht gezeigte Schaltkupplung) ist konfiguriert, die zweite Welle 22 wahlweise mit dem sechsten Zahnrad 42 in drehfeste Verbindung zu bringen oder diese Verbindung zu öffnen, sodass das sechste Zahnrad 42 entweder mit der zweiten Welle 22 fest verbunden oder ihr gegenüber frei drehbar ist.

Die Schaltkupplungen 20, 38 können in an sich bekannter Weise als Schaltmuffen oder dergleichen ausgeführt sein und werden mittels (insbesondere elektromagnetisch, hydraulisch oder pneumatisch) fremdkraftbetätigten Aktoren bewegt. Dazu ist am Bedienerarbeitsplatz des Ackerschleppers eine entsprechende Bedienerschnittstelle vorhanden, vgl. DE 10 2005 002 880 A1, oder die Schaltkupplungen 20, 38 werden durch eine Steuereinrichtung anhand eines selbsttätig anhand einer Identifikation (RFID-Chip, Barcode oder Bilderkennung des Geräts an sich) erkannten oder anhand eines Arbeitsauftrags vorgegebenen Solldrehzahl an der Ausgangsschnittstelle 40 angesteuert.

Es sind folgende Betriebsarten des Zapfwellengetriebes 10 möglich:
(a) Die erste Schaltkupplung 20 verbindet die erste Welle 18 mit dem ersten Zahnrad 24 und die zweite Schaltkupplung 38 verbindet das vierte Zahnrad 32 über die zweite Hohlwelle 34 mit der zweiten Welle 22, sodass der Kraftfluss von der ersten Welle 18 über die erste Schaltkupplung 20 über das erste Zahnrad 24, das vierte Zahnrad 32, die zweite Hohlwelle 34 und die zweite Schaltkupplung 38 zur zweiten Welle 22 und zur Ausgangsschnittstelle 40 verläuft. Diese (erste) Betriebsart kann beispielsweise dazu dienen, bei Nenndrehzahl des Antriebsmotors 12 von z.B. 2100/min an der Ausgangsschnittstelle 40 eine Drehzahl von 1000/min zu erzielen.
(b) Die erste Schaltkupplung 20 verbindet die erste Welle 18 mit der Hohlwelle 26 und somit mit dem zweiten Zahnrad 28 (bzw. die erste Welle 18 direkt mit dem zweiten Zahnrad 28) und die zweite Schaltkupplung 38 verbindet die zweite Hohlwelle 34 (bzw. das fünfte Zahnrad 36) mit der zweiten Welle 22, sodass der Kraftfluss von der ersten Welle 18 über die erste Schaltkupplung 20 über die erste Hohlwelle 26 über das zweite Zahnrad 28 (bzw. von der Schaltkupplung 20 direkt auf das zweite Zahnrad 28), das fünfte Zahnrad 36, die zweite Hohlwelle 34 und die zweite Schaltkupplung 38 (bzw. vom fünften Zahnrad 36 direkt auf die zweite Schaltkupplung 38) zur zweiten Welle 22 und zur Ausgangsschnittstelle 40 verläuft. Diese (zweite) Betriebsart kann beispielsweise dazu dienen, bei einer gegenüber der Nenndrehzahl des Antriebsmotors 12 abgesenkten Drehzahl von z.B. 1800/min an der Ausgangsschnittstelle 40 eine Drehzahl von 1000/min zu erzielen.
(c) Die erste Schaltkupplung 20 verbindet die erste Welle 18 mit der Hohlwelle 26 und somit mit dem dritten Zahnrad 30 und die zweite Schaltkupplung 38 verbindet das sechste Zahnrad 42 mit der zweiten Welle 22, sodass der Kraftfluss von der ersten Welle 18 über die erste Schaltkupplung 20 über die erste Hohlwelle 26 über das dritte Zahnrad 30, das sechste Zahnrad 42 und die zweite Schaltkupplung 38 zur zweiten Welle 22 und zur Ausgangsschnittstelle 40 verläuft. Diese (dritte) Betriebsart kann beispielsweise dazu dienen, bei einer gegenüber der Nenndrehzahl des Antriebsmotors 12 abgesenkten Drehzahl von z.B. 1800/min an der Ausgangsschnittstelle 40 eine Drehzahl von 540/min zu erzielen.
(d) Weiterhin kann die erste Schaltkupplung 20 die erste Welle 18 mit dem ersten Zahnrad 24 verbinden, während die zweite Schaltkupplung 38 die zweite Welle 22 mit dem sechsten Zahnrad 42 verbindet. Der Kraftfluss verläuft dann von der ersten Welle 18 über die erste Schaltkupplung 20, das erste Zahnrad 24, das vierte Zahnrad 32, die zweite Hohlwelle 34, das fünfte Zahnrad 36, das zweite Zahnrad 28, die erste Hohlwelle 26, das dritte Zahnrad 30, das sechste Zahnrad 42 und die zweite Schaltkupplung 38 zur zweiten Welle 22 und zur Ausgangsschnittstelle 40. Diese (vierte) Betriebsart kann beispielsweise dazu dienen, bei Nenndrehzahl des Antriebsmotors 12 von z.B. 2100/min an der Ausgangsschnittstelle 40 eine Drehzahl von 540/min zu erzielen.

Nach alledem ist erkennbar, dass das Zapfwellengetriebe 10 genau zwei Wellen 18, 22 umfasst, von denen eine erste Welle 18 mit der Eingangswelle 14 verbunden oder durch die Kupplung 16 verbindbar ist, und die zweite Welle 22 mit der Ausgangsschnittstelle 40 verbunden ist. Die beiden Wellen 18, 22 verlaufen parallel zueinander und sind jeweils mit drei Zahnrädern (24, 28, 30 und 32, 36, 42) koppelbar, nämlich durch die Schaltkupplungen 20, 38. Das Zapfwellengetriebe 10 umfasst demnach drei kämmende Zahnradpaare (24 und 32, 28 und 36, 30 und 42). Der Aufwand ist demnach nicht nennenswert größer als für ein an sich bekanntes, dreistufiges Zapfwellengetriebe nach dem Stand der Technik (GB 2 363 830 A, DE 10 2005 002 880 A1). Dennoch ist, durch die Bereitstellung der Hohlwellen 26, 34 eine vierte Übersetzungsstufe hinzugekommen, nämlich die vierte Betriebsart (d). Somit wird durch geeignete Wahl der Übersetzungsverhältnisse der kämmenden Zahnradpaare (24 und 32, 28 und 36, 30 und 42) bei Nenndrehzahl und abgesenkter Drehzahl des Antriebsmotors 12 an der Ausgangsschnittstelle 40 wahlweise jeweils eine Drehzahl von 1000/min und 540/min erzielt werden. In den ersten drei Betriebsarten (a) bis (c) erfolgt die Kraftübertragung nur über jeweils ein kämmendes Zahnradpaar, was die Verluste geringhält.

Wie bereits angemerkt, zeigt die Figur 1 eine schließbare Verbindung zwischen der ersten Schaltkupplung 20 und dem zweiten Zahnrad 28 und eine schließbare Verbindung zwischen der zweiten Schaltkupplung 38 und dem fünften Zahnrad 36. Anstelle dessen könnte die erste Schaltkupplung 20 auch direkt mit der ersten Hohlwelle 26 koppelbar sein und/oder die zweite Schaltkupplung 38 direkt mit der zweiten Hohlwelle 34 koppelbar sein. Wie auch schon oben ausgeführt, könnten die beiden Schaltkupplungen 20, 38 auch jeweils durch zwei einzelne Schaltkupplungen ersetzt werden. Zudem könnten die Positionen der Zahnräder 24, 28, 30 an der ersten Welle 18 beliebig permutiert werden, wenn auch die Zahnräder 32, 36, 42 entsprechend permutiert werden. Anders als dargestellt, könnte in der Figur 1 demnach das erste Zahnrad 24 rechts und das dritte Zahnrad 30 links, d.h. dem Antriebsmotor 12 benachbart, angeordnet sein. Weiterhin könnte die Ausgangsschnittstelle 40 an der zweiten Welle 22 auch links liegen, wenn das aus räumlichen Gründen sinnvoll sein sollte.

## Patentansprüche

1. Zapfwellengetriebe (10) für einen landwirtschaftlichen Ackerschlepper, umfassend:
eine erste Welle (18), die mit einem Antriebsmotor (12) verbindbar oder verbunden ist,
eine zweite Welle (22), die mit einer Ausgangsschnittstelle (40) verbindbar oder verbunden ist,
ein erstes Zahnrad (24), ein zweites Zahnrad (28) und ein drittes Zahnrad (30), die koaxial zur ersten Welle (18) angeordnet und jeweils mit der ersten Welle (18) in eine drehfeste, trennbare Verbindung bringbar sind,
ein viertes Zahnrad (32), ein fünftes Zahnrad (36) und ein sechstes Zahnrad (42), die koaxial zur zweiten Welle (22) angeordnet sind, von denen das vierte Zahnrad (32) mit dem ersten Zahnrad (24) kämmt, das fünfte Zahnrad (36) mit dem zweiten Zahnrad (28) kämmt und das sechste Zahnrad (42) mit dem dritten Zahnrad (30) kämmt,
**dadurch gekennzeichnet, dass** das zweite Zahnrad (28) und das dritte Zahnrad (30) gemeinsam an einer ersten Hohlwelle (26) angebracht sind, die mit der ersten Welle (18) in eine drehfeste, trennbare Verbindung bringbar ist,
und dass das vierte Zahnrad (32) und das fünfte Zahnrad (36) gemeinsam an einer zweiten Hohlwelle (34) angebracht sind, die mit der zweiten Welle (22) in eine drehfeste, trennbare Verbindung bringbar ist.

2. Zapfwellengetriebe (10) nach Anspruch 1, wobei eine einzige, erste Schaltkupplung (20) oder zwei getrennte, erste Schaltkupplungen wahlweise die erste Welle (18) mit dem ersten Zahnrad (24) oder der ersten Hohlwelle (26) verbindet oder verbinden.

3. Zapfwellengetriebe (10) nach Anspruch 1 oder 2, wobei eine einzige, zweite Schaltkupplung (38) oder zwei getrennte, zweite Schaltkupplungen wahlweise die zweite Welle (22) mit dem sechsten Zahnrad (42) oder der zweiten Hohlwelle (34) verbindet oder verbinden.

4. Zapfwellengetriebe (10) nach einem der vorhergehenden Ansprüche, wobei in einer ersten Betriebsart die erste Welle (18) mit dem ersten Zahnrad (24) gekoppelt ist und das vierte Zahnrad (32) über die zweite Hohlwelle (34) mit der zweiten Welle (22) gekoppelt ist, sodass der Kraftfluss von der ersten Welle (18) über das erste Zahnrad (24), das vierte Zahnrad (32), die zweite Hohlwelle (34) und die zweite Schaltkupplung (38) zur zweiten Welle (22) und zur Ausgangsschnittstelle (40) verläuft.

5. Zapfwellengetriebe (10) nach einem der vorhergehenden Ansprüche, wobei in einer zweiten Betriebsart die erste Welle (18) mit der Hohlwelle (26) und somit mit dem zweiten Zahnrad (28) gekoppelt ist und die zweite Hohlwelle (34) mit der zweiten Welle (22) gekoppelt ist, sodass der Kraftfluss von der ersten Welle (18) über die erste Hohlwelle (26), das zweite Zahnrad (28), das fünfte Zahnrad (36) und die zweite Schaltkupplung (38) zur zweiten Welle (22) und zur Ausgangsschnittstelle (40) verläuft.

6. Zapfwellengetriebe (10) nach einem der vorhergehenden Ansprüche, wobei in einer dritten Betriebsart die erste Welle (18) mit der Hohlwelle (26) und somit mit dem dritten Zahnrad (20) gekoppelt ist und das sechste Zahnrad (42) mit der zweiten Welle (22) gekoppelt ist, sodass der Kraftfluss von der ersten Welle (18) über die erste Hohlwelle (26), das dritte Zahnrad (30), das sechste Zahnrad (42) und die zweite Schaltkupplung (38) zur zweiten Welle (22) und zur Ausgangsschnittstelle (40) verläuft.

7. Zapfwellengetriebe (10) nach einem der vorhergehenden Ansprüche, wobei in einer vierten Betriebsart die erste Welle (18) mit dem ersten Zahnrad (24) gekoppelt ist, während die zweite Welle (22) mit dem sechsten Zahnrad (42) gekoppelt ist, sodass der Kraftfluss von der ersten Welle (18) über das erste Zahnrad (24), das vierte Zahnrad (32), die zweite Hohlwelle (34), das fünfte Zahnrad (36), das zweite Zahnrad (28), die erste Hohlwelle (26), das dritte Zahnrad (30), das sechste Zahnrad (42) und die zweite Schaltkupplung (38) zur zweiten Welle (22) und zur Ausgangsschnittstelle (40) verläuft.

8. Zapfwellengetriebe (10) nach einem der Ansprüche 4 bis 7, wobei in der ersten Betriebsart bei einer Nenndrehzahl des Antriebsmotors (12) eine Drehzahl von 1000/min an der Ausgangsschnittstelle (40) erzielt wird und/oder in der zweiten Betriebsart bei einer gegenüber der Nenndrehzahl abgesenkten Drehzahl des Antriebsmotors (12) eine Drehzahl von 1000/min an der Ausgangsschnittstelle (40) erzielt wird und/oder in der dritten Betriebsart bei einer gegenüber der Nenndrehzahl abgesenkten Drehzahl des Antriebsmotors (12) eine Drehzahl von 540/min an der Ausgangsschnittstelle (40) erzielt wird, und/oder in der vierten Betriebsart bei einer Nenndrehzahl des Antriebsmotors (12) eine Drehzahl von 540/min an der Ausgangsschnittstelle (40) erzielt wird.

9. Zapfwellengetriebe (10) nach einem der vorhergehenden Ansprüche, wobei das erste Zahnrad (24) an einem ersten Ende der ersten Welle (18) angeordnet ist, das dritte Zahnrad (30 an einem zweiten Ende der ersten Welle (18) angeordnet ist, und das zweite Zahnrad (28) zwischen dem ersten und dritten Zahnrad (24, 30) angebracht ist, wobei das erste Ende der ersten Welle (18) dem Antriebsmotor (12) zu- oder abgewandt ist.

10. Ackerschlepper mit einem Antriebsmotor (12) und einem Zapfwellengetriebe (10) nach einem der vorhergehenden Ansprüche.
